# DEMANDE DE BREVET EUROPEEN

(11) **EP 1 008 481 A1**
(43) Date de publication de la demande: **14.06.2000**
(21) Numéro de dépôt: 99420214.1
(22) Date de dépôt: 22.10.1999
(51) Int. Cl.: B60K 17/35, B60K 17/356

(54) **Transmission pour véhicule automobile**

(30) Priorité: 10.12.1998 FR 9815783
(71) Demandeur: Favarel, Jean-Claude, 32360 Castillon Massas (FR)
(72) Inventeur: Favarel, Jean-Claude, 32360 Castillon Massas (FR)
(74) Mandataire: Hartmann, Jean-Luc

(57) **Abrégé**

Cette transmission pour véhicule automobile présente au moins un dispositif de répartition de puissance entre deux ensembles comportant une ou plusieurs roues (2) entre lesquels doit être répartie une puissance mécanique.

Un dispositif de répartition de puissance au moins comporte un arbre de répartition (6) disposé entre les deux ensembles correspondants et un dispositif différentiel à glissement limité (8) monté sur l'arbre de répartition (6) entre les deux ensembles et permettant des vitesses de rotation différentes aux deux extrémités de l'arbre de répartition.

Un moteur (4) est associé à chaque ensemble comportant une ou plusieurs roues.

Un couplage est réalisé entre chaque sortie de moteur (4) et l'arbre de répartition (6).

## Description

La présente invention concerne une transmission pour véhicule notamment véhicule automobile ou camion.

Le domaine d'application de cette invention est tous les véhicules et est particulièrement adaptée aux véhicules dits tout-terrain. Il peut s'agir de voitures de tourisme, de voitures appelées aussi 4 x 4, d'engins agricoles, d'engins de chantiers, de voitures de compétition, de camions etc.. Ces véhicules comportent toujours au moins deux roues motrices. La plupart du temps, pour les véhicules dits tout-terrain, toutes leurs roues sont motrices. Dans la très grande majorité des cas, le véhicule présente un nombre pair de roues et celles-ci sont montées deux par deux ou quatre par quatre sur des essieux. Un moteur, en général un moteur thermique, entraîne ces roues. Le moteur transmet sa puissance aux roues d'un essieu et une partie de cette puissance est retransmise par un arbre à l'autre, ou aux autres essieux. La transmission entre deux essieux se fait par exemple par un arbre rigide ou bien encore par un arbre muni d'un dispositif à glissement limité. Bien entendu, chaque essieu est muni d'un différentiel.

Il est également connu pour certains engins, notamment des engins de chantiers, de prévoir un moteur hydraulique au niveau de chaque roue. Un moteur thermique alimente alors une pompe hydraulique qui fournit de l'huile à chaque moteur hydraulique.

Un inconvénient de l'arbre reliant deux essieux est qu'il est nécessaire de dimensionner cet arbre pour lui faire passer toute la puissance fournie par le moteur thermique. Cet arbre doit donc être dimensionné en conséquence, et son prix de revient est relativement élevé.

Dans la solution hydraulique, il est nécessaire de prévoir des capteurs permettant de réaliser une bonne répartition de la puissance aux roues motrices. La répartition est alors effectuée en régulant le débit de fluide hydraulique. Cette répartition est gérée électroniquement dans bien des cas, ce qui rend cette solution très chère pour obtenir de bons résultats.

La présente invention a pour but de fournir une nouvelle transmission pour véhicule, adaptée aux véhicules dits tout-terrain qui soit le plus simple possible tout en étant à la fois très fiable et performante. De préférence, cette transmission pourra fonctionner sans capteur et mettra en oeuvre des pièces mécaniques relativement légères.

A cet effet, la transmission qu'elle propose est une transmission pour véhicule présentant au moins un dispositif de répartition de puissance entre deux ensembles comportant une ou plusieurs roues entre lesquels doit être répartie une puissance mécanique.

Selon l'invention, un dispositif de répartition de puissance au moins comporte un arbre de répartition disposé entre les deux ensembles correspondants et un dispositif différentiel à glissement limité monté sur l'arbre de répartition entre les deux ensembles et permettant des vitesses de rotation différentes aux deux extrémités de l'arbre de répartition, un moteur est associé à chaque ensemble comportant une ou plusieurs roues, et un couplage est réalisé entre chaque sortie de moteur et l'arbre de répartition.

On réalise ainsi un couplage mécanique entre les deux ensembles du véhicule. Ce couplage est réalisé par l'intermédiaire de l'arbre de répartition qui ne transmet pas toute la puissance des moteurs correspondants mais uniquement une partie de celle-ci. La vitesse en sortie de chaque moteur est transmise, avec ou sans démultiplication, à l'arbre de répartition. Le dispositif différentiel à glissement limité permet de tolérer de faibles différences de vitesse entre deux sorties de moteur. Toutefois, si la différence de vitesse à la sortie de deux moteurs voisins devient trop importante, l'arbre de répartition se rigidifie et la partie de cet arbre la plus rapide entraîne la partie la moins rapide. Ainsi, un transfert de puissance se fait depuis le moteur tournant plus vite vers l'ensemble dont le moteur tourne moins vite. Seul donc un différentiel de puissance est transmis par l'arbre de répartition.

Cette nouvelle transmission ne met en oeuvre que des éléments mécaniques à la fois très simples et fiables.

Le dispositif différentiel à glissement limité utilisé peut être par exemple un visco-coupleur. On peut également envisager d'autres dispositifs à glissement limité tels par exemple un embrayage électromagnétique ou un différentiel "classique" autobloquant.

Dans une forme de réalisation préférée, les moteurs utilisés sont des moteurs hydrauliques. Dans ce cas, ces derniers sont par exemple alimentés en huile par une pompe hydraulique, elle-même entraînée par un moteur thermique. Il peut s'agir aussi d'une pompe double ou d'un ensemble de deux (ou plus) pompes. Une forme de réalisation avantageuse, par exemple pour réaliser un véhicule de compétition ou faire des économies d'énergie, prévoit qu'un boîtier de répartition est monté entre le moteur thermique et la pompe hydraulique et qu'un volant d'inertie est accouplé à ce boîtier de répartition. Le volant d'inertie peut ainsi accumuler de l'énergie lors d'une décélération et refournir cette énergie lors d'une accélération.

Les moteurs et la (ou les) pompe(s) sont de préférence en circuit hydraulique fermé.

En variante de réalisation, on peut prévoir de remplacer les moteurs hydrauliques par des moteurs électriques.

Selon un premier mode d'exécution de l'invention, chaque ensemble comportant une ou plusieurs roues ne comporte qu'une roue. On a alors un moteur pour chaque roue. Pour des raisons d'encombrement, ce moteur est avantageusement un moteur hydraulique et le dispositif différentiel prévu entre deux roues est par exemple un visco-coupleur.

Une telle transmission pour véhicule peut être équipée d'un dispositif de récupération d'énergie et alors comporter par exemple un boîtier de répartition relié d'une part à un moteur thermique et à une pompe hydraulique à débit variable et d'autre part à un volant d'inertie. Dans ce cas, le boîtier de répartition comporte avantageusement un couple conique double auquel sont reliés deux volants d'inertie tournant en sens inverse. De cette manière on évite des effets gyroscopiques.

Une variante de réalisation prévoit que chaque roue est montée en sortie d'un train épicycloïdal, qu'un moteur hydraulique est monté à l'entrée de chaque train épicycloïdal et que les trains épicycloïdaux sont reliés par l'arbre de répartition au niveau d'un de leurs satellites.

Une telle transmission pour véhicule peut servir de base pour réaliser une transmission comportant plus de deux roues motrices. Une telle transmission comporte alors plusieurs transmissions à deux roues selon le premier mode d'exécution ; le dispositif différentiel est un différentiel mécanique comportant des planétaires et des satellites ; un arbre de liaison relie deux transmissions voisines et un dispositif à glissement limité est monté sur l'arbre de liaison entre les deux transmissions correspondantes. On peut ainsi réaliser des transmissions pour véhicules à quatre, six, huit voire plus de roues motrices. Une transmission pour un tel véhicule est avantageusement telle que chaque différentiel est équipé d'un couple conique et que le (ou les) arbre(s) de liaison est relié à chaque transmission à deux roues au niveau du couple conique.

Selon un deuxième mode d'exécution d'une transmission pour véhicule selon l'invention, chaque ensemble comportant une ou plusieurs roues comporte deux roues reliées entre elles par un différentiel, formant un essieu. On a alors un moteur par essieu.

Chaque essieu est alors par exemple disposé transversalement par rapport au véhicule ; l'arbre de -répartition est disposé longitudinalement par rapport au véhicule et chaque moteur est relié à l'essieu correspondant au niveau du différentiel de l'essieu. Le dispositif différentiel est avantageusement un visco-coupleur. Le couplage entre la sortie de moteur et l'arbre de répartition est par exemple réalisé par une courroie crantée. Cette solution est propre et évite l'utilisation d'un train d'engrenages.

L'arbre de répartition, à au moins l'une de ses extrémités, comporte avantageusement des moyens permettant son couplage avec un arbre similaire. De cette manière, on peut par simple accouplement de deux arbres, réaliser à partir d'un véhicule à quatre roues motrices un véhicule à six, huit, etc. roues motrices.

De toute façon, l'invention sera bien comprise à l'aide de la description qui suit, en référence au dessin schématique annexé, représentant à titre d'exemples non limitatifs des formes de réalisation d'une transmission selon l'invention.
Figure 1 est une vue schématique de dessus montrant les roues d'un véhicule entraîné à l'aide d'une transmission selon l'invention,
Figure 2 est une vue schématique en élévation d'une variante de la transmission montrée sur la figure 1,
Figure 3 est une vue de dessus correspondant à la figure 1 montrant deux essieux selon l'invention reliés entre eux,
Figure 4 est une vue en élévation d'une transmission à quatre roues motrices,
Figure 5 est une vue de dessus de la transmission de la figure 4,
Figure 6 est une vue de dessus d'une transmission à huit roues motrices,
Figure 7 est une vue en élévation d'une transmission à récupération d'énergie selon l'invention,
Figure 8 montre un exemple de transmission complète pour un véhicule à huit roues motrices,
Figure 9 montre l'intégration d'une transmission selon l'invention dans un châssis canal,
Figure 10 est une vue en coupe selon la ligne de coupe X-X de la figure 9,
Figure 11 est une vue de dessus correspondant à la figure 1 pour une variante de réalisation d'une transmission à deux roues motrices,
Figure 12 est une vue en élévation de la transmission représentée à la figure 11, et
Figure 13 montre schématiquement en élévation un groupe motopropulseur compact à quatre roues.

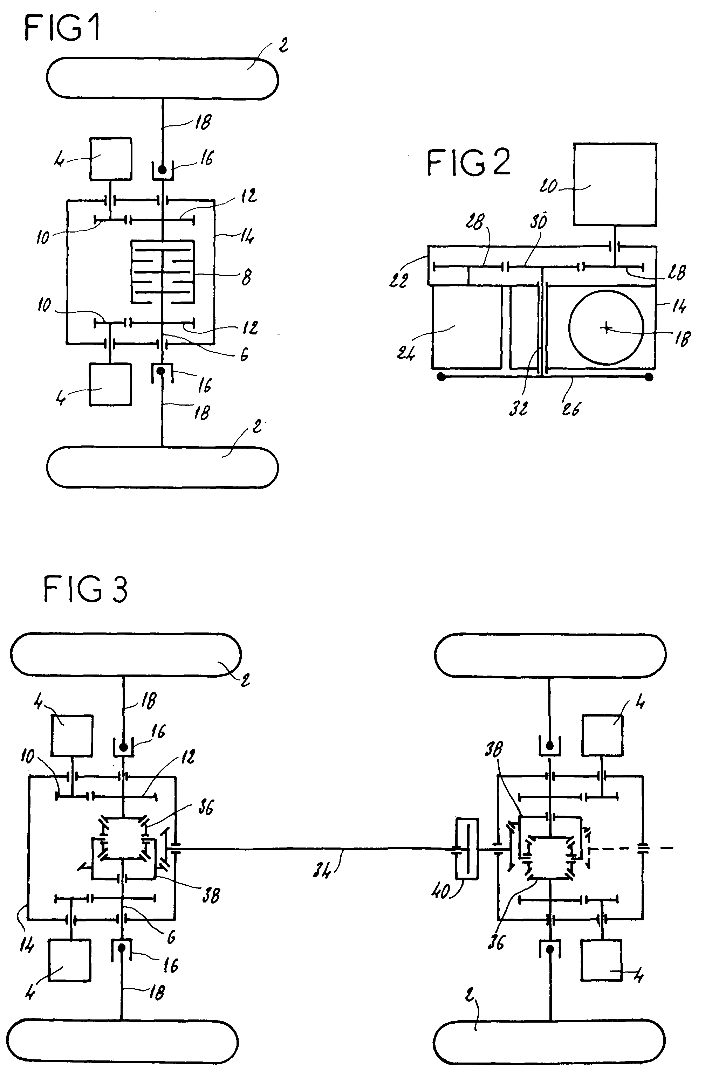

La figure 1 représente en vue de dessus deux roues 2 d'un essieu de véhicule. Entre ces roues 2, est représentée la transmission permettant leur entraînement. Cette transmission comporte deux moteurs hydrauliques 4, un arbre de répartition 6, et un visco-coupleur 8. Chaque moteur 4 entraîne un pignon de sortie 10 qui lui-même est en prise avec un pignon 12 monté sur l'arbre de répartition 6. Les pignons 12 se trouvent de part et d'autre du visco-coupleur 8. L'ensemble formé par les pignons de sortie 10, les pignons d'arbre 12 et le visco-coupleur 8 sont disposés dans un carter 14. L'arbre de répartition 6 traverse ce carter 14 et présente à chacune de ses extrémités un joint homocinétique 16 auquel la roue 2 correspondante est reliée par un bras 18.

L'arbre de répartition est formé par deux demi arbres qui sont reliés au niveau du visco-coupleur 8. Ce dernier autorise une différence de rotation entre les deux demi arbres de l'arbre de répartition 6 de l'ordre de quelques pourcents. Lorsque la différence de vitesse de rotation augmente, les deux parties de l'arbre de répartition 6 deviennent solidaires par l'intermédiaire du visco-coupleur 8. Un tel dispositif est connu de l'homme du métier. Il présente un carter à l'intérieur duquel sont disposés des disques solidaires pour les uns d'un demi arbre et pour les autres de l'autre demi arbre. Ce carter est rempli d'un fluide visqueux qui se fige lorsqu'il est soumis à un cisaillement trop important.

La figure 2 montre en élévation la transmission décrite plus haut équipée en outre de moyens moteur et d'un système de récupération d'énergie. On retrouve sur cette figure le carter 14 et les bras 18 symbolisés ici par une croix. Cette figure montre également un moteur thermique 20, un boîtier de répartition 22, une pompe hydraulique à débit variable 24 et un volant d'inertie 26. Le moteur thermique 20 et la pompe hydraulique à débit variable 24 sont chacun reliés à un pignon 28 placé à l'intérieur du boîtier de répartition 22. Entre ces deux pignons 28, se trouve un pignon 30 en prise avec les deux pignons 28. Ce pignon 30 est relié par un arbre 32 au volant d'inertie 26. L'arbre 32 est placé dans un logement ménagé dans le carter 14. Alors que l'arbre de répartition 6 est disposé horizontalement, l'arbre 32 du volant d'inertie 26 est par exemple disposé verticalement. Comme représenté sur la figure 2, le boîtier de répartition 22 se trouve au-dessus de la transmission tandis que le volant d'inertie se trouve quant à lui en dessous de celle-ci. L'arbre 32 est guidé par des paliers non représentés au dessin. Le volant d'inertie 26 agit comme un accumulateur d'énergie qui emmagasine de l'énergie lors des décélérations et fournit de l'énergie lors d'accélérations.

Le fonctionnement de cette transmission est décrit ci-après.

Lorsque le véhicule équipé de cette transmission roule, la pompe hydraulique 24 alimente chaque moteur hydraulique 4. Si les conditions d'adhérence sont identiques au niveau de chaque roue 2, chaque moteur hydraulique 4 tourne sensiblement à la même vitesse et les roues du véhicule sont entraînées de la même manière. Les deux parties de l'arbre de répartition 6 tournent alors à la même vitesse de rotation. Le visco-coupleur 8 ne voit aucune puissance. Lorsqu'une roue 2 est sur un terrain glissant, le couple résistant opposé au moteur 4 correspondant est diminué et ce moteur a donc tendance à tourner plus vite. Le pignon 12 correspondant et le demi arbre de répartition correspondant voient alors leur vitesse de rotation augmenter. Cette augmentation de vitesse de rotation est transmise directement au visco-coupleur 12. Lorsque la différence de vitesse de rotation des deux demi arbres de l'arbre de répartition 6 dépasse une limite prédéterminée, le visco-coupleur 16 vient rigidifier l'arbre de répartition de manière à avoir de part et d'autre du visco-coupleur des vitesses de rotation d'arbre proches. Il y a alors transfert de puissance à travers le visco-coupleur 8 d'un demi arbre vers l'autre demi arbre. On a ainsi un ajustement automatique, de façon entièrement mécanique, de la vitesse de rotation au niveau de chaque roue 2. La puissance délivrée au niveau de la pompe hydraulique 24 est idéalement répartie au niveau des roues 2 sans nécessiter la présence de capteurs de répartition de puissance. Le visco-coupleur 8 ne sert en aucun cas à transmettre toute la puissance de la pompe hydraulique 24. Il sert uniquement à transmettre d'une roue à l'autre un différentiel de puissance.

La figure 3 montre en vue de dessus une transmission à quatre roues motrices. Cette transmission est obtenue en accouplant deux transmissions à deux roues motrices correspondant à une variante de réalisation de la transmission à deux roues motrices de la figure 1. On a donc ici deux essieux comportant chacun deux roues motrices accouplées par un arbre de liaison 34. Chaque essieu comporte les mêmes éléments que l'essieu représenté sur la figure 1. La seule différence est que le dispositif à glissement limité de la figure 1 est un visco-coupleur 8 alors que sur la figure 3 il s'agit, pour les deux essieux, d'un différentiel classique 36 équipé d'un couple conique 38 et dont le glissement est limité. La figure 3, comme toutes les autres figures, est une vue schématique et afin de ne pas surcharger celle-ci, les moyens permettant de limiter le glissement du différentiel 36 n'ont pas été représentés. Ces moyens sont connus de l'homme du métier.

Les deux essieux de cette transmission à quatre roues motrices sont sensiblement identiques. L'arbre de liaison relie ces deux essieux au niveau des couples coniques 38. Un visco-coupleur 40 est disposé sur l'arbre 34 entre les deux essieux. L'arbre de liaison 34 est destiné à transmettre uniquement un différentiel de puissance qui pourrait exister entre les deux essieux de cette transmission à quatre roues motrices.

Comme expliqué ci-dessus, les deux roues 2 d'un même essieu tournent sensiblement à la même vitesse. L'arbre de liaison 34 est également entraîné en rotation. Lorsque les vitesses de rotation des roues au niveau des deux essieux sont identiques, l'arbre de liaison 34 tourne mais sans transmettre de puissance. Si les roues d'un essieu se mettent à tourner plus vite que les roues de l'autre essieu, le visco-coupleur 40 vient rigidifier l'arbre de liaison 34 et de la puissance est alors transmise de l'essieu dont les roues tournent le plus vite vers l'essieu dont les roues tournent moins vite. On a ici un fonctionnement analogue entre les deux essieux au fonctionnement décrit ci-dessus en référence à la figure 1 pour les deux roues 2.

Cette transmission est modulable. Comme suggéré à droite sur la figure 3, il est possible de venir accoupler un autre essieu, identique aux deux premiers, par un arbre de liaison dont une extrémité est représentée en pointillés. Cet arbre est bien entendu de préférence également équipé d'un dispositif différentiel à glissement limité, tel par exemple un visco-coupleur.

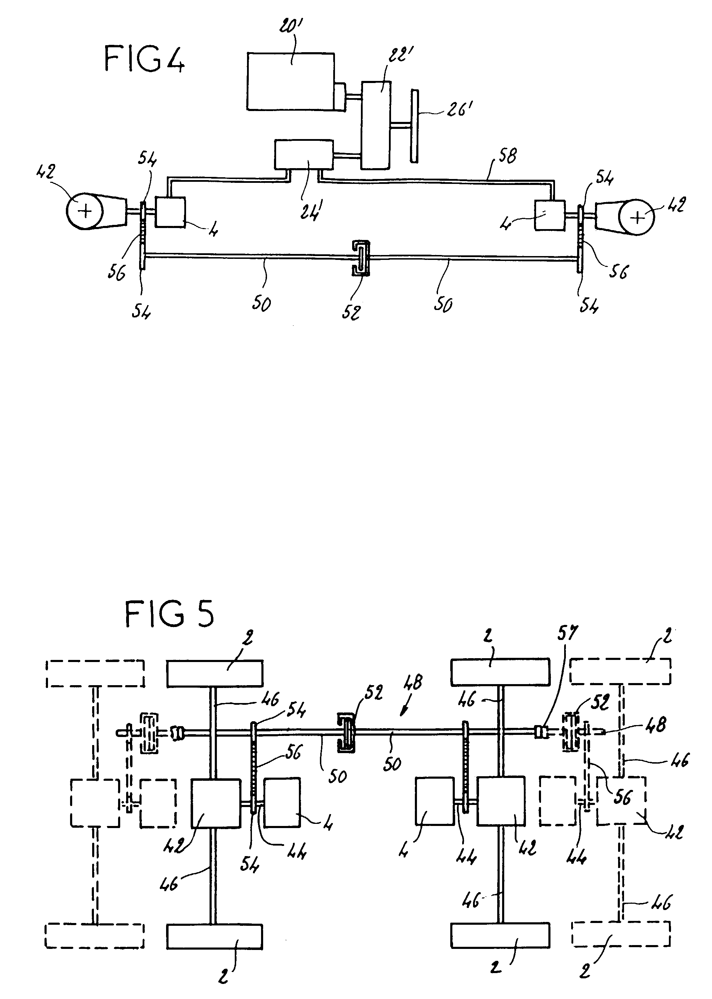

Les figures 4 et 5 montrent une variante de réalisation pour un véhicule à quatre roues motrices. Dans cet exemple, au lieu d'avoir- un moteur hydraulique par roue, on a un moteur hydraulique 4 par essieu. On a alors une répartition de puissance entre les deux essieux.

Chaque essieu comporte un différentiel 42 de préférence à glissement limité placé à chaque fois entre deux roues 2. La figure 5 est une vue schématique de dessus et il n'a pas été représenté sur celle-ci des moyens permettant par exemple de tourner deux roues d'un essieu.

De façon connue, chaque différentiel comporte un arbre d'entrée 44 et deux arbres de sortie 46. L'arbre d'entrée 44 est un arbre moteur tandis que les arbres de sortie 46 permettent de transmettre par l'intermédiaire du différentiel 42, le mouvement reçu par l'arbre d'entrée 44 aux roues 2. Chaque arbre d'entrée 44 est entraîné directement par un moteur hydraulique 4.

Les arbres de sortie 46 reliant les roues 2 au différentiel 42 correspondant s'étendent transversalement par rapport au véhicule. Un arbre de répartition 48 est formé de deux demi arbres 50 reliés entre eux par un dispositif à glissement limité 52. Chaque demi arbre 50 est monté sur des paliers non représentés. Il est entraîné en rotation par l'arbre d'entrée 44 du différentiel 42 correspondant. A cet effet, une poulie 54 est montée sur l'arbre d'entrée 44, et une autre poulie 54 est montée sur le demi arbre 46 correspondant, face à l'autre poulie. Une courroie 56 relie ces deux poulies 54.

Le dispositif à glissement limité 52 est par exemple un visco-coupleur. Il autorise une différence de vitesse de rotation entre les deux demi arbres 50 qu'il relie de l'ordre de quelques pourcents. Ce visco-coupleur est du même type que les visco-coupleurs 8 et 40 décrits plus haut.

La figure 4 montre en élévation le système décrit plus haut et représente également schématiquement les moyens moteurs. On retrouve sur cette figure les moteurs hydrauliques 4. Ils sont reliés chacun par une conduite 58 à une pompe hydraulique 24' à débit variable. Cette dernière est une pompe double et est accouplée à un volant d'inertie 26' et à un moteur thermique 20' par l'intermédiaire d'un boîtier de répartition 22'.

Le fonctionnement est sensiblement identique à ce qui a été décrit plus haut. Lorsqu'un moteur hydraulique 4 tourne plus vite qu'un autre, le visco-coupleur 52 rend les deux demi arbres 50 solidaires l'un de l'autre et ainsi l'arbre de répartition 48 transmet une partie de la puissance du moteur hydraulique 4 qui tourne le plus vite vers l'autre essieu. On a donc ainsi une répartition de puissance entre les deux essieux.

Par rapport à la forme de réalisation montrée sur la figure 3, on note quelques différences. Ici on a que deux moteurs hydrauliques alors que sur la forme de réalisation de la figure 3 il y en a quatre. Dans la variante de la figure 5, il est donc nécessaire de prévoir, pour une même puissance globale du véhicule, des moteurs hydrauliques plus gros. En outre, les différentiels 42 voient passer toute la puissance du moteur hydraulique correspondant. Les différentiels 36 de la figure 3 ne voient quant à eux passer qu'une partie de la puissance des moteurs hydrauliques 4 correspondants. Pour la forme de réalisation de la figure 5, il faut donc dimensionner les différentiels 42 et les moteurs hydrauliques 4 pour une puissance relativement importante tandis que dans la forme de réalisation de la figure 3 de plus petits moteurs hydrauliques et de plus petits différentiels sont utilisés.

Cette transmission présente également l'avantage de pouvoir réaliser un véhicule tout-terrain modulable. On peut en effet par exemple, passer de la configuration à quatre roues motrices représentée en traits pleins sur la figure 5 à une configuration à huit roues motrices qui comporte alors les quatre roues montrées en traits pleins et les quatre roues montées en traits pointillés. On peut par exemple avoir un châssis à quatre roues sur lequel est monté le moteur thermique 20' et la pompe hydraulique 24', ainsi qu'un outil ou une remorque montés sur un essieu et équipés d'un moteur hydraulique. La remorque ou similaire, de même que le châssis, au niveau d'un essieu, comporte deux roues 2, un différentiel 42, un arbre d'entrée 44 entraîné par un moteur 4 ainsi que deux arbres de sortie 46 reliant le différentiel 42 aux roues 2. La remorque comporte également un arbre de répartition 48 de longueur adaptée, cet arbre étant muni d'un dispositif à glissement limité 52 et d'un entraînement présentant deux poulies 54 et une courroie 56. Pour permettre le couplage de la remorque au châssis, des moyens sont prévus à chaque extrémité de l'arbre de répartition 48 du châssis et à une extrémité de l'arbre de répartition de la remorque. Ces moyens de couplage sont par exemple constitués par une prise de force 57.

Ainsi, pour accrocher la remorque et la relier au châssis, il suffit de la coupler au niveau de la prise de force 57, d'alimenter le moteur hydraulique 4 en huile sous pression à partir de la pompe hydraulique montée sur le châssis et éventuellement, de réaliser un branchement électrique. Ces opérations peuvent être rapidement réalisées. Bien entendu, si une même pompe hydraulique 24' alimente trois moteurs hydrauliques à la place de deux, la vitesse de rotation des moteurs hydrauliques sera diminuée. En contrepartie, la charge utile du véhicule est très sensiblement augmentée et/ou sa pression au sol est diminuée.

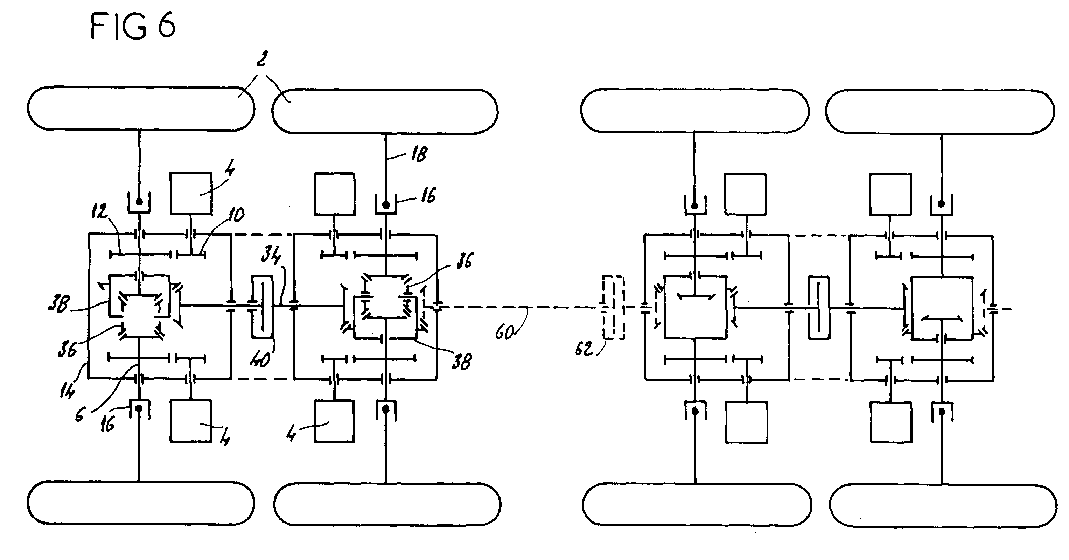

La figure 6 montre une transmission pour un véhicule à deux essieux tandem. Cette transmission est extrapolée à partir de la forme de réalisation montrée sur la figure 3. On retrouve sur cette figure 6 deux transmissions à quatre roues motrices telles celles de la figure 3. Les mêmes références sont conservées. La seule différence ici est la longueur de l'arbre de liaison 34. Comme déjà suggéré en pointillés sur la figure 3, un arbre de liaison 60 représenté en pointillés et sur lequel est monté un visco-coupleur 62 relie les deux ensembles à quatre roues motrices. Bien entendu, la longueur de l'arbre de liaison 60 est déterminée en fonction de la longueur du véhicule que l'on souhaite réaliser. On réalise ici, grâce aux arbres de liaison 34 et 60 ainsi qu'aux différentiels à glissement limité 36 et 62, un ensemble à huit roues motrices. On n'a pas représenté sur la figure 6 les moyens permettant de rendre des roues 2 directrices. On assure ainsi de manière entièrement mécanique, sans gestion électronique, une excellente répartition de puissance entre huit roues d'un véhicule. A quelques pourcents près, nécessaires notamment dans les virages, les vitesses de rotation des huit roues sont sensiblement identiques.

L'arbre 60 et le différentiel 62 peuvent aussi être supprimés. Dans ce cas, on pourra obtenir une régulation de manière hydraulique pour une semi-remorque par exemple. On limitera le flux d'huile différentiel provenant du défaut d'adhérence d'un groupe d'essieux par rapport à l'autre groupe d'essieux par un système allant du simple gicleur à un asservissement suivant les performances désirées.

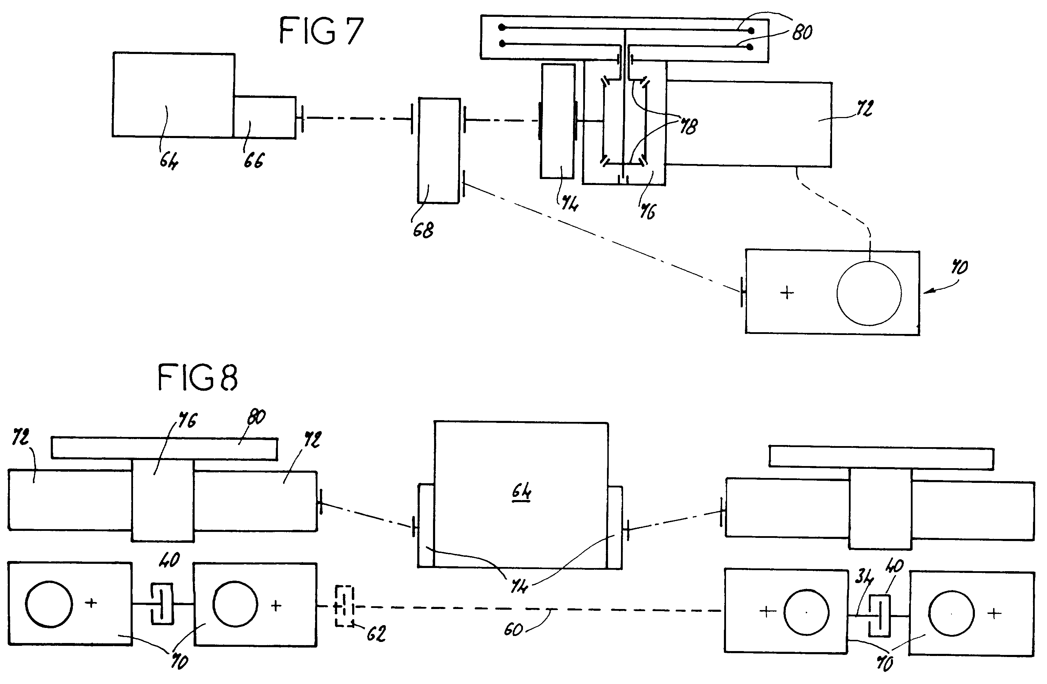

Les figures 7 et 8 montrent un exemple de moyens moteur pouvant être associés à la transmission représentée sur la figure 6. La figure 7 est un schéma de principe montrant comment les moyens moteur peuvent agir sur un essieu de la transmission représentée à la figure 6 tandis que la figure 8 représente schématiquement les quatre essieux et les moyens moteur correspondants.

Sur la figure 7, sont représentés un moteur thermique 64 associé à une boîte de vitesses 66. L'arbre de sortie de boîte de vitesses, représenté en trait mixte, est relié à un boîtier de sélection 68. Ce dernier permet de sélectionner l'endroit où sera transmis la puissance du moteur thermique 64. Cette puissance peut être envoyée soit directement à un essieu portant la référence générale 70, soit à une pompe hydraulique à débit variable 72 associé à un dispositif récupérateur d'énergie.

L'essieu 70 est identique à un essieu de la figure 3 ou de la figure 6. Toutefois, il faut ici que les moteurs hydrauliques utilisés soient débrayables. Lorsque la puissance du moteur thermique est transmise par le boîtier de sélection 68 directement à cet essieu 70, le mouvement en sortie de boîtier de sélection 68 passe au niveau du couple conique 38 associé au différentiel 36. Cet essieu 70 fonctionne alors comme un essieu représenté sur les figures 4 et 5 puisqu'un arbre moteur transmet sa puissance à deux roues par l'intermédiaire d'un différentiel.

La puissance du moteur thermique 64 peut également être envoyée à la pompe hydraulique à débit variable et au système récupérateur d'énergie. Le mouvement de rotation en sortie de boîte de vitesses 66 est alors transmis par l'intermédiaire du boîtier de sélection 68 à un coupleur 74. La pompe hydraulique à débit variable 72 est entraînée par ce coupleur par l'intermédiaire d'un couple conique double 76. Le mouvement de rotation du moteur thermique 64 est transmis par l'intermédiaire du coupleur 74 et du couple conique double 76 à la pompe 72. Deux satellites 78 opposés de ce couple conique double sont chacun associés à un volant d'inertie 80. Les deux satellites 78 tournent dans des sens opposés ce qui fait que les deux volants d'inertie 80 tournent également en sens opposé. On supprime ainsi l'effet gyroscopique qui existe lorsqu'un seul volant d'inertie est utilisé.

Sur la figure 8, on retrouve le moteur thermique 64, deux coupleurs 74 et quatre essieux 70. Chaque essieu est relié à un essieu voisin par un arbre de liaison 34 ou 60 et un visco-coupleur 40 ou 62. Comme sur les figures 2, 4 et 7, une croix indique l'emplacement d'un bras 18 et/ou d'un axe de roue 2. Ici, chaque coupleur 74 est associé à deux essieux 70.

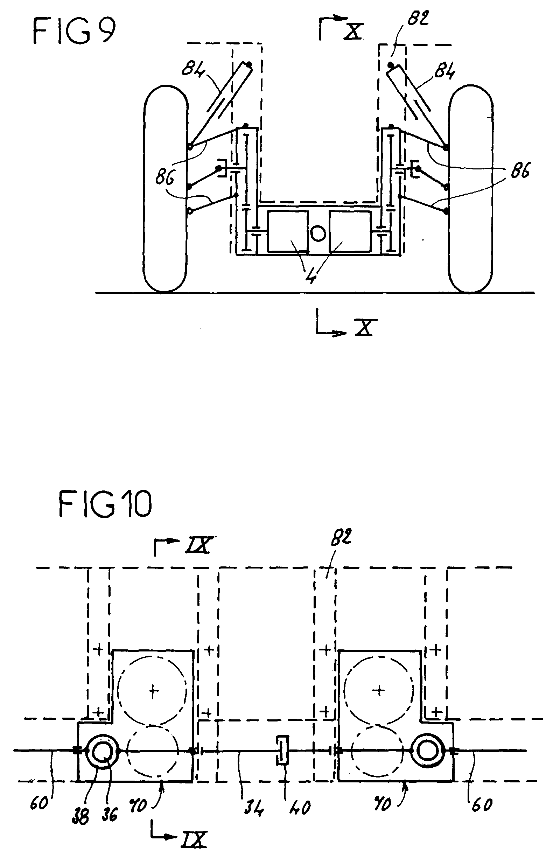

La transmission complète, y compris les moyens moteur de la figure 8, peut être logée dans un châssis canal comme représenté sur la figure 9. Cette figure 9 est une coupe selon la ligne de coupe IX-IX de la figure 10. Pour abaisser le centre de gravité, un engrenage est rajouté entre la roue et la sortie du moteur correspondant. Les deux engrenages (sortie moteur plus engrenage supplémentaire) sont représentés à chaque fois en traits mixtes sur la figure 10. Sur cette figure, on a également représenté en trait fort le différentiel 36 et son couple conique 38 pour chaque essieu. Sur les coupes des figures 9 et 10 sont représentés en pointillés les contours d'un châssis canal 82. La figure 9 montre également de manière schématique les amortisseurs 84 et bras de suspension 86 du véhicule. Sur les figures 9 et 10 ne sont pas représentés les moyens moteur mais uniquement la transmission.

Cette conception est adaptée au transport/chargement de véhicules lourds sur terrain à faible portance. On peut aussi envisager de placer côte à côte deux véhicules présentant un châssis canal 82 et de faire monter alors un engin de grande largeur sur les deux véhicules mis côte à côte.

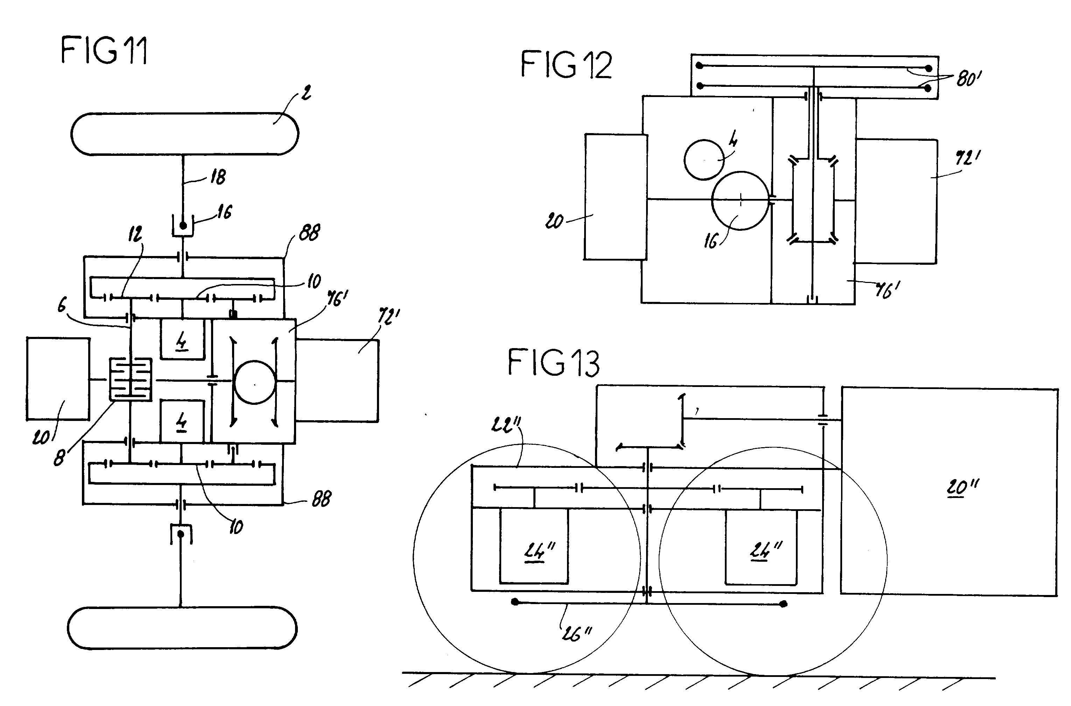

Les figures 11 et 12 représentent respectivement en vue de dessus et en élévation une variante de réalisation de l'essieu représenté sur la figure 1. On retrouve ici deux roues 2 entraînées chacune par un moteur hydraulique 4 et reliées l'une à l'autre par un arbre de répartition 6 sur lequel est monté un visco-coupleur 8. Chaque moteur hydraulique 4 présente un pignon de sortie 10 en prise avec un pignon 12 monté sur l'arbre de répartition 6. Le pignon de sortie 10 et le pignon 12 de l'arbre de répartition 6 font, pour chaque roue, partie d'un train épicycloïdal 88. L'essieu représenté intègre un dispositif récupérateur d'énergie. Ce dernier comporte un couple conique double 76' semblable au couple conique double 76 des figures 7 et 8. Le moteur thermique 20 est utilisé ici pour entraîner une pompe hydraulique à débit variable 72' par l'intermédiaire du couple conique double 76'. Il entraîne alors, de la même manière que le couple conique double 76, des volants d'inertie 80' qui tournent en sens opposé.

La figure 13 montre une autre forme de réalisation d'un groupe motopropulseur compact intégrant un dispositif de récupération d'énergie. Ce groupe motopropulseur compact comporte ici quatre roues. On a donc deux essieux en tandem. Cette forme de réalisation est extrapolée de la forme de réalisation de la figure 3. L'ensemble de la transmission est logé dans un même carter. Les couples coniques 38 sont remplacés par une série de pignons incluant un dispositif à glissement limité non représenté. Le centre du carter est ainsi libéré pour l'installation d'un volant d'inertie 26" et deux pompes hydrauliques 24". Cet ensemble est entraîné par un moteur thermique 20" par l'intermédiaire d'un boîtier de répartition 22".

On réalise ainsi des groupes motopropulseurs autonomes compacts. Ces groupes motopropulseurs comportent deux ou quatre roues motrices. Pour réaliser un véhicule ayant plus de roues motrices, on peut utiliser alors plusieurs groupes motopropulseurs de ce type. On peut ainsi réaliser avec un groupe de base de nombreuses variantes de véhicules.

Comme il va de soi, l'invention ne se limite pas à la forme de réalisation décrite ci-dessus à titre d'exemple non limitatif; elle en embrasse au contraire toutes les variantes dans le cadre des revendications ci-après.

Les véhicules décrits ci-dessus sont des véhicules présentant une transmission hydrostatique. Toutefois, il est tout à fait envisageable d'utiliser des moteurs électriques à la place des moteurs hydrauliques. Le fonctionnement de la transmission n'en serait pas modifié.

Les dispositifs à glissement limité décrits sont des visco-coupleurs ou des différentiels à glissement limité. Tout autre dispositif à glissement limité peut également convenir. On peut par exemple envisager d'utiliser un embrayage électromagnétique.

L'utilisation d'un volant d'inertie et d'un boîtier de répartition entre le moteur thermique et la pompe hydraulique permet d'augmenter les reprises du véhicule et de faire des économies d'énergie. Ceci peut être intéressant pour un véhicule de compétition. Dans d'autres applications, il peut être tout à fait envisageable d'avoir un entraînement direct de la pompe hydraulique par le moteur thermique.

## Revendications

1. Transmission pour véhicule automobile présentant au moins un dispositif de répartition de puissance entre deux ensembles comportant une ou plusieurs roues (2) entre lesquels doit être répartie une puissance mécanique,
caractérisée en ce qu'un dispositif de répartition de puissance au moins comporte un arbre de répartition (6;48) disposé entre les deux ensembles correspondants et un dispositif différentiel à glissement limité (8;36) monté sur l'arbre de répartition (6;48) entre les deux ensembles et permettant des vitesses de rotation différentes aux deux extrémités de l'arbre de répartition,
en ce qu'un moteur (4) est associé à chaque ensemble comportant une ou plusieurs roues, et
en ce qu'un couplage est réalisé entre chaque sortie de moteur (4) et l'arbre de répartition (6;48).

2. Transmission pour véhicule selon la revendication 1, caractérisée en ce que les moteurs utilisés sont des moteurs hydrauliques (4).

3. Transmission pour véhicule selon la revendication 2, caractérisée en ce que les moteurs hydrauliques (4) sont alimentés en huile par au moins une pompe hydraulique (24;24';24";72;72'), elle(s)-même(s) entraînée(s) par un moteur thermique (20,20',20";64).

4. Transmission pour véhicule selon la revendication 3, caractérisée en ce qu'un boîtier de répartition (22;22';22";76) est monté entre le moteur thermique (20,20',20";64) et la pompe hydraulique (24;24';24";72;72') et en ce qu'un volant d'inertie (26;26';26";80;80') est accouplé à ce boîtier de répartition (22;22';22";76).

5. Transmission pour véhicule selon l'une des revendications 3 ou 4, caractérisée en ce que les moteurs (4) et la pompe (24;24';24";72;72') sont en circuit hydraulique fermé.

6. Transmission pour véhicule selon l'une des revendications 1 à 5, caractérisée en ce que chaque ensemble comportant une ou plusieurs roues ne comporte qu'une roue (2).

7. Transmission pour véhicule selon la revendication 6, caractérisée en ce que le dispositif différentiel prévu entre deux roues est un visco-coupleur (8).

8. Transmission pour véhicule selon l'une des revendications 6 ou 7, caractérisée en ce qu'elle comporte un boîtier de répartition (2) relié d'une part à un moteur thermique (2) et à une pompe hydraulique (2) à débit variable et d'autre part à un volant d'inertie (2).

9. Transmission pour véhicule selon la revendication 8, caractérisée en ce que le boîtier de répartition comporte un couple conique double (76;76') auquel sont reliés deux volants d'inertie (80,80') tournant en sens inverse.

10. Transmission pour véhicule selon l'une des revendications 6 à 9, caractérisée en ce que chaque roue (2) est montée en sortie d'un train épicycloïdal (88), en ce qu'un moteur hydraulique (4) est monté à l'entrée de chaque train épicycloïdal (88) et en ce que les trains épicycloïdaux (88) sont reliés par l'arbre de répartition (6) au niveau d'un de leurs satellites.

11. Transmission pour véhicule, caractérisée en ce qu'elle comporte plusieurs transmissions à deux roues selon la revendication 6, en ce que le dispositif différentiel est un différentiel mécanique (36) comportant des planétaires et des satellites, en ce qu'un arbre de liaison (34) relie deux transmissions voisines et en ce qu'un dispositif à glissement limité (40) est monté sur l'arbre de liaison (34) entre les deux transmissions correspondantes.

12. Transmission pour véhicule selon la revendication 11, caractérisée en ce que chaque différentiel (36) est équipé d'un couple conique (38) et en ce que le (ou les) arbre(s) de liaison (34) est relié à chaque transmission à deux roues (2) au niveau du couple conique (38).

13. Transmission pour véhicule selon l'une des revendications 1 à 5, caractérisé en ce que chaque ensemble comportant une ou plusieurs roues comporte deux roues (2) reliées entre elles par un différentiel (42), formant un essieu.

14. Transmission pour véhicule selon la revendication 13, caractérisée en ce que chaque essieu est disposé transversalement par rapport au véhicule, en ce que l'arbre de répartition (48) est disposé longitudinalement par rapport au véhicule et en ce que chaque moteur (4) est relié à l'essieu correspondant au niveau du différentiel (42) de l'essieu.

15. Transmission pour véhicule selon l'une des revendications 13 ou 14, caractérisée en ce que le dispositif différentiel est un visco-coupleur (52).

16. Transmission pour véhicule selon l'une des revendications 13 à 15, caractérisée en ce que le couplage entre la sortie de moteur (4) et l'arbre de répartition (48,50) est réalisé par une courroie crantée (56).

17. Transmission pour véhicule selon l'une des revendications 13 à 16, caractérisée en ce que l'arbre de répartition (48), à au moins l'une de ses extrémités, comporte des moyens permettant son couplage avec un arbre similaire.
